# EUROPÄISCHE PATENTANMELDUNG

(11) **EP 0 864 782 A1**
(43) Veröffentlichungstag der Anmeldung: **16.09.1998**
(21) Anmeldenummer: 98103205.5
(22) Anmeldetag: 24.02.1998
(51) Int. Cl.: F16H 61/32, F16H 63/30

(54) **Vorrichtung zum elektromechanischen Schalten eines Gangwechselgetriebes**

(30) Priorität: 12.03.1997 DE 19710121
(71) Anmelder: Heidemann Verwaltungsgesellschaft mbH, 37574 Einbeck (DE)
(72) Erfinder: Krebs, Thomas, 59602 Rüthen (DE)
(74) Vertreter: Sobisch, Peter, Dipl.-Ing.

(57) **Zusammenfassung**

Eine Vorrichtung zum elektromechanischen Schalten eines Gangwechselgetriebes ist durch eine Spindel (1) gekennzeichnet, die als Verbindungsglied mit der Schaltwelle des Gangwechselgetriebes bestimmt ist und über welche Schaltbewegungen auf die Schaltwelle übertragen werden, die als Translationsbewegungen in Richtung der Achse (4) der Spindel (1) und als Rotationsbewegungen um diese Achse (4) ausgestaltet sind. Über eine elektrisch schaltbare Kupplung ist die Eingangsbewegung eines Antriebsmotors nach Maßgabe der Schaltstellung der Kupplung wahlweise in eine Rotations- oder eine Translationsbewegung der Spindel (1) umsetzbar, wobei anhand eines Drehwinkels des Antriebsmotors sowie der Schaltstellung der Kupplung unter Zugrundelegung eines definierten Anfangspunktes der Bewegungen die Schaltstellung dem Nutzer des Getriebes signalisierbar ist und wobei in Verbindung mit einer Steuerungseinrichtung ausgehend von einer bestimmten Schaltstellung 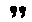 verbotene" Schaltvorgänge softwaremäßig festlegbar sind. Die Vorrichtung ist zur Nachrüstung herkömmlicher Gangwechselgetriebe mit Hinblick auf eine elektromechanische Betätigung hin bestimmt.

## Beschreibung

Die Erfindung bezieht sich auf eine Vorrichtung entsprechend dem Oberbegriff des Anspruchs 1.

Im Zuge der allgemeinen Energiespardiskussion, insbesondere der Forderung nach weiterer Massereduzierung im Kraftfahrzeugbau ist bereits mehrfach vorgeschlagen worden, das bisherige Konzept eines Gangwechselgetriebes, bei welchem das eigentliche Getriebe über ein Schaltgestänge mit einem sich im Innenraum des Fahrzeugs befindlichen Schalthebel in Verbindung steht, mittels welchem der Nutzer Wähl- und Schaltbewegungen überträgt, durch ein elektrisches System zu ersetzen, wonach insbesondere das Schaltgestänge entfällt und wobei der Nutzer zur Durchführung von Schaltvorgängen lediglich elektrische Schalteinrichtungen betätigt, die über entsprechende Leitungen mit dem Getriebe in Verbindung stehen. Dieses System bringt außerdem den weiteren Vorteil einer größeren Flexibilität hinsichtlich der räumlichen Anordnung mit sich, da das bisher benötigte Bauvolumen zur Unterbringung des Schaltgestänges entfällt.

Es ist die Aufgabe der Erfindung, eine gattungsgemäße Vorrichtung vorzuschlagen, welche in einfacher Weise, insbesondere ohne wesentliche Veränderungen an dem Gangwechselgetriebe die elektrische Durchführung von Schaltvorgängen ermöglicht. Gelöst ist diese Aufgabe bei einer solchen Vorrichtung durch die Merkmale des Kennzeichnungsteils des Anspruchs 1.

Erfindungswesentlich ist zunächst einmal, daß das Betätigungsglied der Vorrichtung, insbesondere dessen Schaltbewegungen dahingehend ausgelegt sind, daß diese an die eingangsseitigen Schaltbewegungen, insbesondere die Schalt- und Wählbewegungen des Gangwechselgetriebes angepaßt sind. Dies bedeutet, daß die erfindungsgemäße Vorrichtung insoweit Schaltbewegungen motorisch nachbildet, die ansonsten manuell über einen Handschalthebel und ein Schaltgestänge erzeugt werden. Dies bedeutet ferner, daß ein herkömmliches Gangwechselgetriebe ohne wesentliche konstruktive Änderungen in Verbindung mit der erfindungsgemäßen Vorrichtung nutzbar ist. Sämtliche Funktionselemente der Vorrichtung sind innerhalb eines Gehäuses untergebracht, welches zur Verbindung mit dem Getriebegehäuse bestimmt und ausgestaltet ist. Die Vorrichtung bildet somit ein Anbauteil an einem herkömmlichen Getriebegehäuse. Sie beinhaltet neben einem Antriebsmotor ferner eine Steuerungseinrichtung, die jedoch entfernt von dem übrigen Gehäuse angeordnet sein kann und mit letzterem lediglich über elektrische Leitungen in Verbindung steht. Neben einer hohen Flexibilität bei der Anordnung der Steuerungseinrichtung ergibt sich der weitere Vorteil, daß ein ansonsten für die Unterbringung eines Schaltgestänges benötigtes Bauvolumen nunmehr anderweitig nutzbar ist. Insgesamt bringt die Vorrichtung gegenüber dem herkömmlichen System ferner eine bedeutende Masseersparnis mit sich.

Die Merkmale des Anspruchs 2 sind auf die weitere Ausgestaltung der das Schaltglied bildenden Spindel sowie einer Kupplungsscheibe gerichtet, von deren Schaltstellung die Bewegungsart der Spindel abhängig ist. Die Kupplungsscheibe ist zu diesem Zweck zwischen zwei Stellungen verschiebbar, wobei in einer ersten Stellung die Spindel unverdrehbar, jedoch axial verschiebbar gehalten ist und wobei in der zweiten Stellung die Spindel verdrehschlüssig mit der Spindelmutter in Verbindung steht und somit drehbar ist.

Gemäß den Merkmalen der Ansprüche 3 und 4 ragt die Spindel an lediglich einer Seite des Gehäuses aus diesem heraus und ist an dieser Seite zur Ankupplung an die Schaltwelle bzw. Eingangswelle eines Gangwechselgetriebes bestimmt, wohingegen das die Spindel aufnehmende Gehäuse im übrigen geschlossen ausgebildet ist. Dadurch, daß an dem Gehäuse ein Aufnahmeraum angeordnet ist, der von seinen Abmessungen her an die Verschiebebewegung der Spindel sowie an deren Abmessungen angepaßt ist, ist eine massearme, insbesondere Bauvolumen einsparende Ausbildung der Vorrichtung gegeben.

Der Antriebsmotor steht mit der Spindelmutter gemäß den Merkmalen des Anspruchs 5 über ein Untersetzungsgetriebe in Verbindung, wobei die Spindelmutter in dem Gehäuse drehbar gelagert ist.

Letztere bildet entsprechend den Merkmalen des Anspruchs 6 gleichzeitig das Führungslager für die Kupplungsscheibe, und zwar unter Mitwirkung einer an dieser angeordneten Führungsbuchse.

Die Merkmale des Anspruchs 7 sind auf die Art der Betätigung der Kupplungsscheibe gerichtet. Es ist diese hiernach elektrisch mittels eines Magnetsystems betätigbar, und zwar unter Mitwirkung der Steuerungseinrichtung.

Dadurch, daß entsprechend den Merkmalen des Anspruchs 8 die Schaltstellung der Spindel über wenigstens ein Sensorelement berührungslos erfaßbar ist, besteht die Möglichkeit, die Schaltstellung über entsprechende optische Anzeigeelemente der Steuerungseinrichtung dem jeweiligen Nutzer sichtbar zu machen. Indem die Schaltstellung der Spindel somit in der Steuerungseinrichtung durch Speicherung der sie kennzeichnenden Parameter abrufbar ist, ist ferner die Möglichkeit gegeben, softwaremäßig 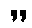 verbotene" Schaltvorgänge zu definieren.

Sowohl die Kupplungsscheibe als auch die Spindelmutter weisen entsprechend den Merkmalen des Anspruchs 9 auf ihren, einander axial gegenüberliegenden Seiten Profilabschnitte auf, die zueinander komplementär ausgebildet sind und zur Bereitstellung eines verdrehschlüssigen Formschlusses nach Maßgabe der Schaltstellung der Kupplungsscheibe bestimmt sind.

Die Merkmale der Ansprüche 10 und 11 sind auf die weitere Ausgestaltung der Kupplungsscheibe gerichtet. Anstelle eines Formschlusses zwischen den zugekehrten Seiten der Kupplungsscheibe einerseits und der Abschlußwandung andererseits kommt auch ein reibschlüssiger Eingriff in Betracht.

Die Merkmale der Ansprüche 12 bis 14 sind auf die weitere konstruktive Konkretisierung der Vorrichtung gerichtet. Wesentlich ist, daß die Vorrichtung über lediglich zwei Steuerungsgrößen ansteuerbar ist, nämlich durch Betätigung der Kupplung einerseits und des Antriebsmotors andererseits. Der Antriebsmotor ist so eingerichtet, daß dieser eine drehwinkelgetreue Steuerung ermöglicht und es können sämtliche, für diesen Zweck geeignete Antriebsmotoren oder auch Antriebsregelungskonzepte eingesetzt werden. Im Rahmen der Steuerungseinrichtung sollte die Drehwinkel- und Verschiebeposition der Spindel abrufbar sein, wobei diese Werte entweder direkt über entsprechende Drehwinkel- bzw. Weggeber oder indirekt durch Interpretation sonstiger Betriebsparameter wie z.B. Drehwinkel des Antriebsmotors in Verbindung mit einer Schaltstellung der Kupplung ermittelt werden können.

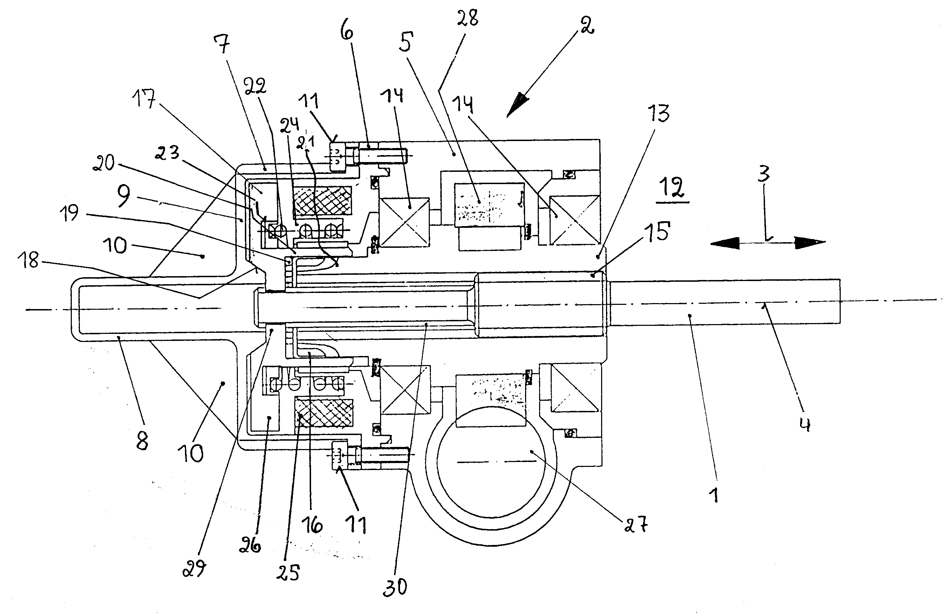

Die Erfindung wird im folgenden unter Bezugnahme auf das in der Zeichnung schematisch wiedergegebene Ausführungsbeispiel näher erläutert werden.

Mit 1 ist eine Spindel bezeichnet, welche in einer im folgenden noch zu erläuternden Weise innerhalb eines Gehäuses 2 gelagert ist und welche zur Übertragung von Schaltbewegungen einerseits axial in Richtung der Pfeile 3, somit parallel zu ihrer Achse 4 translatorisch und andererseits um ihre Achse 4 rotatorisch in definierter Weise motorisch bewegbar ist. Die Spindel 1 steht an ihrem, aus dem Gehäuse 2 herausragenden Ende mit der zeichnerisch nicht dargestellten Schaltwelle eines Kraftfahrzeuggetriebes in Verbindung, und zwar unter Zwischenanordnung einer geeigneten Wellenausgleichskupplung, durch welche die genannten translatorischen und rotatorischen Bewegungen der Spindel 1 als Schalt- und Wählbewegungen in das Getriebe eingeleitet werden. Wesentlich in diesem Zusammenhang ist, daß das Gehäuse 2 dazu bestimmt ist, mit dem Getriebegehäuse verbunden zu werden, wobei die genannten Bewegungskomponenten der Spindel 1 an diejenigen des ansonsten eingesetzten, mit einem Handschalthebel in Wirkverbindung stehenden Schaltgestänges angepaßt sind, so daß das an sich bekannte System aus Schaltgestänge und Handschalthebel durch die erfindungsgemäße Vorrichtung austauschbar ist. Hierauf wird im folgenden noch näher eingegangen werden.

Das Gehäuse 2 besteht aus einem ersten zylindrischen Gehäuseteil 5, an welches sich unter Zwischenanordnung eines Halteteils 6 ein zweites Gehäuseteil 7 anschließt, welches auf seiner, dem Gehäuseteil 5 abgekehrten Seite in einer zur Außenseite abgeschlossenen und zu der Achse 4 rotationssymmetrischen Aufnahmekammer 8 endet. Die Aufnahmekammer 8 erstreckt sich axial aus der ansonsten radial verlaufenden Abschlußwandung 9 des Gehäuseteils 7 heraus und steht mit dieser zur konstruktiven Versteifung über Stegwandungen 10 in Verbindung.

Die Aufnahmekammer 8 bildet eine Aufnahme für die translatorische Bewegung der Spindel 4 in Richtung der Pfeile 3.

Die Verbindung zwischen dem Gehäuseteil 7, dem Halteteil 6 und dem Gehäuseteil 5 erfolgt über periphere, sich parallel zu der Achse 4 erstreckende Schrauben 11.

Die, dem Gehäuseteil 7 gegenüberliegende Seite 12 des Gehäuses 2 kann im übrigen durch eine zeichnerisch nicht wiedergegebene, eine zentrale Öffnung zur Durchführung der Spindel aufweisende Lagerplatte abgeschlossen sein.

Mit 13 ist eine Spindelmutter bezeichnet, die außenseitig über die axial voneinander beabstandeten Wälzlager 14 in dem Gehäuseteil 5 um die Achse 4 drehbar gelagert ist und die innenseitig mit dem Verzahnungsabschnitt 15 der Spindel 1 im Eingriff steht. Das. dem Gehäuseteil 7 zugekehrte Ende der Spindelmutter 13 endet stirnseitig in einem Profilabschnitt 16, dessen Bedeutung im folgenden noch näher erläutert werden wird. Die Spindelmutter 13 weist im übrigen eine axiale Länge auf, die in Abhängigkeit von der axialen Bewegung der Spindel 1 in Richtung der Pfeile 3 bemessen ist.

Mit 17 ist eine Kupplungsscheibe bezeichnet, die relativ zu der Spindel 1 in Richtung der Pfeile 3 verschiebbar ist und zwar zwischen einer ersten, in der Zeichnung gezeigten Grenzstellung, in der ein sich zur Achse 4 in Richtung auf die Seite 12 hin konisch verjüngender Abschnitt 18 an einem entsprechend gestalteten Abschnitt der Abschlußwandung 9 des Gehäuseteils 7 anliegt und einer zweiten, der ersten gegenüberliegenden Grenzstellung, in welcher ein axial orientierter Profilabschnitt 19 mit den diesem gegenüberliegendem Profilabschnitt 16 der Spindelmutter 13 in Eingriff steht, so daß eine verdrehschlüssige Verbindung zwischen der Kupplungsscheibe 17 und der Spindelmutter 13 gegeben ist. Die in der Zeichnung gezeigte erste Grenzstellung kann entweder im Bereich des Abschnitts 18 oder auch an einer sonstigen Stelle der Abschlußwandung 9 formschlüssig dahingehend gesichert sein, daß eine verdrehschlüssige Verbindung zwischen der Kupplungsscheibe 17 und der Abschlußwandung 9 besteht.

Mit 20 ist eine, an der Kupplungsscheibe 17 angeformte Führungsbuchse bezeichnet, die sich axial auf der, der Abschlußwandung 9 abgekehrten Seite erstreckt und auf einem Führungsabschnitt 21 der Spindelmutter 13 eine Gleitführung für die Kupplungsscheibe 17 in Richtung der Pfeile 3 bildet. Der Profilabschnitt 19 befindet sich somit innerhalb der Führungsbuchse 20.

Die in der Zeichnung gezeigte erste Grenzstellung der Kupplungsscheibe 17 wird durch eine Schraubenfeder 22 gesichert, deren eines, der Abschlußwandung 9 zugekehrtes Ende in einer Ringnut 23 der Kupplungsscheibe 17 und deren anderes Ende in einer entsprechenden Ringnut 24 eines, in das Gehäuse 2 hinein ragenden Teiles des Halteteils 6 aufgenommen ist.

Das Halteteil 6 dient ferner der Aufnahme eines elektrisch betätigbaren, sich global ringartig und konzentrisch zu der Achse 4 erstreckenden Magnetsystems 25, dem mit Abstand ein, als Anker 26 fungierender Abschnitt der Kupplungsscheibe 17 axial gegenüberliegt. Der Anker 26 befindet sich an dem radial äußersten Bereich der Kupplungsscheibe 17. Letztere in Verbindung mit dem Magnetsystem 26 und der Feder 22 bilden somit eine elektrisch betätigbare Kupplung, deren Funktion im Rahmen des Erfindungsgegenstands im folgenden noch näher erläutert werden wird.

Mit 27 ist das Schneckenrad eines Schneckengetriebes bezeichnet, dessen Schnecke 28 mit der Außenseite der Spindelmutter 13 verdrehschlüssig in Verbindung steht. Das Schneckenrad 27 seinerseits steht mit einem zeichnerisch nicht dargestellten, nach Maßgabe vorgebbarer Drehwinkel steuerbaren elektrischen Antriebsmotor, z. B. einem Gleichstrommotor, einem Schrittmotor oder dergleichen in Verbindung.

Zeichnerisch ebenfalls nicht dargestellt ist eine elektrische Steuerungseinrichtung, die einerseits mit dem Antriebsmotor sowie der Kupplung und andererseits mit geeigneten, entfernt angeordneten Betätigungsorganen in Verbindung steht, welche in noch zu erläuternder Weise der Schaltung des Kraftfahrzeuggetriebes dienen.

In der, in der Zeichnungsfigur dargestellten Stellung der Kupplung ist deren Kupplungsscheibe 17 einerseits gegenüber dem Gehäuseteil 7 fixiert und steht ferner über ihren Kupplungsabschnitt 29 mit einer Längsnut 30 der Spindel 1 formschlüssig in Verbindung. Dies bedeutet, daß bei einem Antrieb über das Schneckenrad 27 die Spindel 1 aufgrund des Eingriffs zwischen dem Verzahnungsabschnitt 15 und der Spindelmutter 13 eine reine Translationsbewegung in Richtung der Pfeile 3 ausführt, und zwar nach Maßgabe der Drehrichtung des Antriebs. Eine Ansteuerung der Kupplung dahingehend, daß diese die in der Zeichnung dargestellte Stellung verläßt und in ihre andere, oben dargelegte Grenzstellung überführt wird, hat zur Folge, daß die Kupplungsscheibe 17 nunmehr formschlüssig aufgrund des Eingriffs der Profilabschnitte 16, 19 mit der Spindelmutter 13 im Eingriff steht, so daß ein Antrieb über das Schneckenrad 27 nunmehr zu einer reinen Rotationsbewegung der Spindel 1 um die Achse 4 führt. Nach Maßgabe der Schaltstellung der Kupplung sind somit Translations- und Rotationsbewegungen der Spindel 1 willkürlich wählbar.

Zeichnerisch nicht dargestellt ferner ist ein geeignetes, vorzugsweise berührungslos arbeitendes Sensorelement, welches beispielsweise mit dem Schneckenrad 27 in Verbindung steht und welches unter Zugrundelegung eines vorgebbaren Anfangspunktes der Drehbewegung den Drehwinkel erfaßt, aus welchem wiederum in Verbindung mit der Schaltstellung der Kupplung die augenblickliche Stellung der Spindel, und zwar sowohl nach Maßgabe eines Drehwinkels als auch nach Maßgabe einer Translationsstrecke eindeutig festlegbar, im Rahmen der Steuerungseinrichtung als diskrete Schaltstellung des Kraftfahrzeuggetriebes interpretierbar und gegebenenfalls für den Benutzer des Kraftfahrzeugs in geeigneter Weise optisch signalisierbar ist. Wähl- und Schaltbewegungen können selbstverständlich in beliebiger Weise den Rotations- und Translationsbewegungen der Spindel 1 zugeordnet werden, und zwar in Abhängigkeit von den Schalteigenschaften des jeweils benutzten Getriebes. Wesentlich ist insoweit lediglich, daß diese beiden Schaltbewegungen der Spindel 1 quantitativ und ihrem räumlichen Bezug nach Maßgabe der Schaltbewegungen eines herkömmlichen Schaltgetriebes ausgestaltet sind, so daß die erfindungsgemäße Vorrichtung unmittelbar in Verbindung mit einem herkömmlichen Schaltgetriebe Verwendung finden kann.

Im Rahmen der Steuerungseinrichtung und nach Maßgabe der, durch eine bestimmte Translation und durch eine bestimmte Rotation gekennzeichneten Stellung der Spindel können softwaremäßig auch 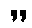 verbotene" Schaltvorgänge definiert werden, die mit Rücksicht auf Eigenschaften des Kraftfahrzeuggetriebes beachtet werden müssen.

Die erfindungsgemäße Vorrichtung kann ferner auch dazu benutzt werden, um in Verbindung mit der genannten Steuerungseinrichtung ein herkömmliches schaltbares Getriebe mit Hinblick auf einen automatisierten Betrieb umzurüsten, so daß dieses global Eigenschaften eines Automatik-Getriebes erhält. Voraussetzung hierzu sind lediglich eine dementsprechend elektrisch betätigbare Fahrzeugkupplung sowie die softwaremäßige Festlegung von Schaltvorgängen in Abhängigkeit von durch bestimmte Parameter gekennzeichneten Betriebszuständen des Motors.

Ausgehend von dem oben dargelegten Grundprinzip des Erfindungsgegenstands, welches durch eine elektromotorisch nach Maßgabe einer Translations- und einer Rotationsbewegung steuerbare Spindelwelle gekennzeichnet ist, sind zahlreiche Abwandlungen der oben lediglich beispielhaft beschriebenen Konstruktionsform möglich, indem lediglich Maschinen- bzw. Konstruktionselemente benutzt werden, die den Beschriebenen funktionell gleichwertig oder zumindest ähnlich sind.

## Patentansprüche

1. Vorrichtung zum elektromechanischen Schalten eines Gangwechselgetriebes mit einem Antriebsmotor, einem zur Verbindung mit dem Getriebe bestimmten Schaltglied und einer Steuerungseinrichtung,
dadurch gekennzeichnet,
- daß das Schaltglied eine Spindel (1) ist, welche mittels des Antriebsmotors wahlweise entweder um ihre Achse (4) drehbar oder in Richtung ihrer Achse (4) verschiebbar ist, und zwar nach Maßgabe von Schalt- und Wählbewegungen zum Schalten des Getriebes,
- daß die Spindel (1) zur Verbindung mit der Schaltwelle des Getriebes bestimmt und angeordnet ist,
- wobei sämtliche Funktionselemente der Vorrichtung in einem, zur Verbindung mit dem Getriebegehäuse bestimmten Gehäuse (2) angeordnet sind und
- daß die Steuerungseinrichtung zur Bewirkung sämtlicher Schaltbewegungen eingerichtet ist und zumindest mit dem Antriebsmotor in Wirkverbindung steht.

2. Vorrichtung nach Anspruch 1,
dadurch gekennzeichnet,
- daß die Spindel (1) über einen Verzahnungsabschnitt (15) mit einer, diese umgebenden Spindelmutter (13) im Eingriff steht,
- daß eine mit der Spindel (1) verdrehschlüssig verbundene, jedoch relativ zu dieser axial bewegbare Kupplungsscheibe (17) vorgesehen ist,
- daß die Kupplungsscheibe (17) zwischen einer ersten, gegenüber dem Gehäuse (2) fixierten Stellung und einer zweiten Stellung axial verschiebbar ist, in der ein Formschluß zwischen der Kupplungsscheibe (17) und der Spindelmutter (13) besteht und
- daß die Kupplungsscheibe (17) unter Mitwirkung der Steuerungseinrichtung zwischen den beiden genannten Stellungen elektromotorisch bewegbar ist.

3. Vorrichtung nach Anspruch 1 oder 2,
dadurch gekennzeichnet,
- daß die Spindel (1) an der einen Seite des Gehäuses (2) aus diesem herausragt und
- daß das Gehäuse (2) im übrigen geschlossen ausgebildet ist.

4. Vorrichtung nach Anspruch 3,
dadurch gekennzeichnet,
- daß an dem Gehäuse (2), und zwar auf der, der einen Seite gegenüberliegenden Seite eine Aufnahmekammer (8) zur Aufnahme der Spindel (1) angeordnet ist und
- daß die Aufnahmekammer (8) nach Maßgabe der Abmessungen der Spindel (1) sowie deren maximalen Verschiebeweges bemessen ist.

5. Vorrichtung nach einem der Ansprüche 1 bis 4,
dadurch gekennzeichnet,
- daß der Antriebsmotor über ein Untersetzungsgetriebe mit der Spindelmutter (13) in Verbindung steht und
- daß die Spindelmutter (13) über Wälzlager (14) in dem Gehäuse (2) gelagert ist.

6. Vorrichtung nach einem der Ansprüche 2 bis 5,
dadurch gekennzeichnet,
- daß die Kupplungsscheibe (17) über eine, an dieser angeordnete, sich koaxial zu der Achse (4) erstreckende Führungsbuchse (20) auf einem entsprechenden Abschnitt der Spindelmutter (13) gleitfähig gelagert ist.

7. Vorrichtung nach einem der Ansprüche 2 bis 6,
dadurch gekennzeichnet,
- daß die Kupplungsscheibe (17) über einen, vorzugsweise einstückig mit dieser ausgebildeten Anker (26), dem axial mit Abstand ein elektrisch betätigbares ringartiges Magnetsystem (25) gegenübersteht, zwischen den genannten Stellungen elektromotorisch bewegbar ist und
- daß das Magnetsystem (25) mit der Steuerungseinrichtung in Wirkverbindung steht.

8. Vorrichtung nach einem der Ansprüche 1 bis 7,
gekennzeichnet
- durch wenigstens ein, vorzugsweise berührungslos wirkendes` die durch einen Drehwinkel und einen Verschiebeweg der Spindel (1) darstellbare Schaltstellung derselben erfassendes Sensorelement, welches mit der Steuerungseinrichtung in Wirkverbindung steht.

9. Vorrichtung nach einem der vorangegangenen Ansprüche 2 bis 8,
dadurch gekennzeichnet,
- daß die Kupplungsscheibe (17) und die Spindelmutter (13) auf ihren, einander axial gegenüberliegenden Seiten mit Profilabschnitten (16, 19) versehen sind, die zur Bereitstellung eines Formschlusses nach Maßgabe der Schaltstellung der Kupplungsscheibe (17) bestimmt und ausgestaltet sind.

10. Vorrichtung nach einem der vorangegangenen Ansprüche 2 bis 9,
dadurch gekennzeichnet,
- daß eine der beiden Schaltstellungen der Kupplungsscheibe (17) durch eine Feder (22) gesichert ist.

11. Vorrichtung nach einem der Ansprüche 2 bis 10,
dadurch gekennzeichnet,
- daß die Kupplungsscheibe (17) auf ihrer, einer Abschlußwandung (9) des Gehäuses (2) zugekehrten Seite mit einer Profilierung versehen ist, die nach Maßgabe der Schaltstellung der Kupplungsscheibe (17) zum Eingriff mit einer komplementären Profilierung der Abschlußwandung (9) bestimmt und ausgestaltet ist.

12. Vorrichtung nach einem der Ansprüche 5 bis 11,
dadurch gekennzeichnet,
- daß das Untersetzungsgetriebe ein Schneckengetriebe ist.

13. Vorrichtung nach einem der Ansprüche 1 bis 12,
dadurch gekennzeichnet,
- daß der Antriebsmotor ein drehwinkelgetreu steuerbarer Gleichstrommotor, ein Schrittmotor oder dergleichen ist.

14. Vorrichtung nach Anspruch 12 oder 13,
dadurch gekennzeichnet,
- daß das Schneckenrad (27) des Schneckengetriebes mit einem Sensorelement als Drehwinkelgeber ausgerüstet ist, welches mit einem stationären Empfangsteil in Wirkverbindung steht, so daß aus der Schaltstellung der Kupplungsscheibe (17) in Verbindung mit dem über das Sensorelement erfaßten Drehwinkel unter Mitwirkung der Steuerungseinrichtung die Schaltstellung der Spindel (1) ableitbar ist.
